(19) Europäisches Patentamt
European Patent Office
Office européen des brevets

(11) **EP 4 787 656 A1**

(12) **EUROPEAN PATENT APPLICATION**
published in accordance with Art. 153(4) EPC

(43) Date of publication:
**05.08.2026 Bulletin 2026/32**

(21) Application number: **24914932.9**

(22) Date of filing: **08.10.2024**

(51) International Patent Classification (IPC):
***H02J 3/38*** *(2026.01)*

(52) Cooperative Patent Classification (CPC):
**H02J 3/00; H02J 3/0014; H02J 3/14; H02J 3/32; H02J 3/38; H02J 3/40**

(86) International application number:
**PCT/CN2024/123484**

(87) International publication number:
**WO 2025/145711 (10.07.2025 Gazette 2025/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.01.2024 CN 202410015876**

(71) Applicant: **Huawei Digital Power Technologies Co., Ltd.**
**Shenzhen, Guangdong 518043 (CN)**

(72) Inventors:
• **TAN, Tian**
  **Shenzhen, Guangdong 518043 (CN)**
• **XIN, Kai**
  **Shenzhen, Guangdong 518043 (CN)**
• **DONG, Mingxuan**
  **Shenzhen, Guangdong 518043 (CN)**

(74) Representative: **Maiwald GmbH**
**Engineering**
**Elisenhof**
**Elisenstrasse 3**
**80335 München (DE)**

(54) **MICROGRID SYNCHRONIZATION CONTROL METHOD AND MICROGRID POWER SUPPLY SYSTEM**

(57) Embodiments of this application disclose a microgrid synchronization control method and a microgrid power supply system, and pertain to the field of power supply technologies. In embodiments of this application, a central controller may directly send a phase difference between voltages on two sides of a grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in embodiments of this application can improve a speed of synchronization control.

A power converter receives a phase difference from a central controller, where the phase difference is a difference between a phase of a first voltage and a phase of a second voltage, the first voltage is a voltage on a circuit between the power converter and a grid-connected switch, and the second voltage is a voltage on a circuit between a power grid and the grid-connected switch ∼ 801

The power converter compensates for the phase of the first voltage based on the phase difference ∼ 802

FIG. 8

**Description**

This application claims priority to Chinese Patent Application No. 202410015876.7, filed on January 4, 2024 and entitled "MICROGRID SYNCHRONIZATION CONTROL METHOD AND MICROGRID POWER SUPPLY SYSTEM", which is incorporated herein by reference in its entirety.

**TECHNICAL FIELD**

Embodiments of this application relate to the field of power supply technologies, and in particular, to a microgrid synchronization control method and a microgrid power supply system.

**BACKGROUND**

A microgrid is a small-scale power grid that can achieve a basic balance between internal power supply and power consumption. In a running process of the microgrid, if a circuit fault occurs or a part of generated power is suddenly lost, resulting in insufficient energy supply, the microgrid needs to be quickly connected to an external power grid through synchronization control, to ensure power supply reliability. A purpose of synchronization control is to ensure that an amplitude difference, a phase difference, and a frequency difference that are between a voltage on a microgrid side and a voltage on an external grid side are all less than specific thresholds. That is, the voltage on the microgrid side and the voltage on the external grid side meet a synchronization control condition. This prevents an oscillation from occurring in a system when the microgrid is connected to the external power grid.

**SUMMARY**

Embodiments of this application provide a microgrid synchronization control method and a microgrid power supply system, to improve a speed of synchronization control. Technical solutions are as follows.

According to a first aspect, a microgrid synchronization control method is provided. The method is applied to a microgrid power supply system. The microgrid power supply system includes a central controller, at least one power converter, and a grid connection switch. The grid connection switch is connected between the at least one power converter and a power grid.

In this method, the central controller sends a phase difference between a first voltage and a second voltage to the at least one power converter, to enable the at least one power converter to compensate for a phase of the first voltage based on the phase difference, where the first voltage is a voltage on a circuit between the at least one power converter and the grid connection switch, and the second voltage is a voltage on a circuit between the power grid and the grid connection switch. In response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, the central controller controls the grid connection switch to be turned on, to enable the power grid to supply power to the at least one power converter through the grid connection switch.

In this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

Based on the method provided in the first aspect, in a possible implementation, the central controller obtains the frequency difference between the first voltage and the second voltage. The central controller determines a reference active power based on the phase difference and the frequency difference. The central controller sends the reference active power to the at least one power converter, to enable the at least one power converter to adjust the phase of the first voltage based on the reference active power. Based on the method provided in the first aspect, in a possible implementation, the central controller obtains the amplitude difference between the first voltage and the second voltage. The central controller determines a reference reactive power based on the phase difference and the amplitude difference. The central controller sends the reference reactive power to the at least one power converter, to enable the at least one power converter to adjust an amplitude of the first voltage based on the reference reactive power.

In this embodiment of this application, to ensure precision of synchronization control while improving the speed of synchronization control, the central controller may further obtain the frequency difference between the first voltage and the second voltage, or obtain the amplitude difference between the first voltage and the second voltage. In this way, when the power converter subsequently compensates for the phase of the first voltage in a direct phase difference compensation manner, the central controller may further perform high-precision control over the phase difference or the amplitude difference between the first voltage and the second voltage based on the reference active power or the reference reactive power in a closed-loop control manner. In other words, this embodiment of this application further provides a microgrid synchronization control solution that achieves both the precision of synchronization control and the speed of synchronization control.

Based on the method provided in the first aspect, in a possible implementation, the central controller collects voltage information of the first voltage and voltage information of the second voltage. The voltage information indicates a case in which an instantaneous voltage of a corresponding voltage changes with time. The central controller determines the phase difference based on the voltage information of the first voltage and the voltage information of the second voltage.

In the foregoing manner, the central controller may determine the phase difference based on voltage information collected in real time.

According to a second aspect, a microgrid synchronization control method is provided. The method is applied to a microgrid power supply system. The microgrid power supply system includes at least one power converter and a grid connection switch. The grid connection switch is connected between the at least one power converter and a power grid.

In the method, the power converter receives a phase difference from a central controller. The phase difference is a difference between a phase of a first voltage and a phase of a second voltage. The first voltage is a voltage on a circuit between the at least one power converter and the grid connection switch, and the second voltage is a voltage on a circuit between the power grid and the grid connection switch. The power converter compensates for the phase of the first voltage based on the phase difference.

In this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

Based on the method provided in the second aspect, in a possible implementation, that the power converter compensates for the phase of the first voltage based on the phase difference includes: superimposing the phase difference on a reference phase of the first voltage, to obtain a compensated reference phase; and adjusting, based on the compensated reference phase, the phase of the first voltage in a closed-loop control manner.

The phase difference is directly superimposed on the reference phase of the first voltage, which can directly compensate for the reference phase of the first voltage. Compared with a solution of adjusting the reference phase in the closed-loop control manner, a solution of directly compensating for the reference phase can quickly adjust the phase of the first voltage.

Based on the method provided in the second aspect, in a possible implementation, that the power converter compensates for the phase of the first voltage based on the phase difference includes: dividing the phase difference into a plurality of sub-phase differences; and compensating for at least one of the plurality of sub-phase differences to the first voltage in at least one control period, respectively.

To improve precision of synchronization control, when compensating for the reference phase of the first voltage based on the phase difference, the power converter may further divide the phase difference into a plurality of parts, and then separately compensate for the reference phase of the first voltage in different control periods.

Based on the method provided in the second aspect, in a possible implementation, an implementation process of dividing the phase difference into the plurality of sub-phase differences may be as follows: if the phase difference exceeds a phase difference threshold, dividing the phase difference into the plurality of sub-phase differences.

In this embodiment of this application, when receiving the phase difference between the first voltage and the second voltage, the power converter may further determine the phase difference. If the phase difference exceeds the phase difference threshold, the phase difference is divided into the plurality of sub-phase differences. Correspondingly, if the phase difference does not exceed the phase difference threshold, the phase difference does not need to be divided. This avoids a case in which when the phase difference is small, the phase difference is also divided into the plurality of sub-phase differences, which further affects the speed of synchronization control.

Based on the method provided in the second aspect, in a possible implementation, the power converter receives a reference active power from the central controller. The power converter adjusts the phase of the first voltage based on the reference active power. Based on the method provided in the second aspect, in a possible implementation, the power converter receives a reference reactive power from the central controller. The power converter adjusts an amplitude of the first voltage based on the reference reactive power.

In this embodiment of this application, to ensure precision of synchronization control while improving the speed of synchronization control, the central controller may further obtain the frequency difference between the first voltage and the second voltage, or obtain the amplitude difference between the first voltage and the second voltage. In this way, when the power converter subsequently compensates for the phase of the first voltage in a direct phase difference compensation manner, the central controller may further perform high-precision control over the phase difference or the amplitude difference between the first voltage and the second voltage based on the reference active power or the reference reactive power in a closed-loop control manner. In other words, this embodiment of this application further provides a microgrid synchronization control solution that achieves both the precision of synchronization control and the speed of synchronization control.

According to a third aspect, a microgrid power supply system is provided. The microgrid power supply system includes a central controller, at least one power converter, and a grid connection switch. The grid connection switch is connected between the at least one power converter and a power grid.

The central controller is configured to send a phase difference between a first voltage and a second voltage to the at least one power converter. The first voltage is a voltage on a circuit between the at least one power converter and the grid connection switch, and the second voltage is a voltage on a circuit between the power grid and the grid connection switch.

The power converter is configured to: receive the phase difference, and compensate for a phase of the first voltage based on the phase difference.

The central controller is further configured to: in response to a case in which a current phase difference between the first voltage and the second voltage is less than a phase difference threshold, a current frequency difference between the first voltage and the second voltage is less than a frequency difference threshold, and a current amplitude difference between the first voltage and the second voltage is less than an amplitude difference threshold, control the grid connection switch to be turned on, to enable the power grid to supply power to the at least one power converter through the grid connection switch.

Based on the system provided in the third aspect, in a possible implementation, the central controller is further configured to: obtain a frequency difference between the first voltage and the second voltage, determine a reference active power based on the phase difference and the frequency difference, and send the reference active power to the at least one power converter. The power converter is further configured to: receive the reference active power, and adjust the phase of the first voltage based on the reference active power.

Based on the system provided in the third aspect, in a possible implementation, the central controller is further configured to: obtain an amplitude difference between the first voltage and the second voltage, determine a reference reactive power based on the phase difference and the amplitude difference, and send the reference reactive power to the at least one power converter. The power converter is configured to: receive the reference reactive power, and adjust an amplitude of the first voltage based on the reference reactive power.

Based on the system provided in the third aspect, in a possible implementation, the central controller is further configured to: collect voltage information of the first voltage and voltage information of the second voltage, where the voltage information indicates a case in which an instantaneous voltage of a corresponding voltage changes with time; and determine the phase difference based on the voltage information of the first voltage and the voltage information of the second voltage.

Based on the system provided in the third aspect, in a possible implementation, the power converter is configured to: superimpose the phase difference on a reference phase of the first voltage, to obtain a compensated reference phase; and adjust, based on the compensated reference phase, the phase of the first voltage in a closed-loop control manner.

Based on the system provided in the third aspect, in a possible implementation, the power converter is configured to: divide the phase difference into a plurality of sub-phase differences; and compensate for at least one of the plurality of sub-phase differences to the first voltage in at least one control period, respectively.

For technical effects of the system provided in the third aspect, refer to the technical effects of the microgrid synchronization control method provided in the first aspect or the second aspect. Details are not described herein again.

## BRIEF DESCRIPTION OF DRAWINGS

FIG. 1 is a diagram of a structure of a microgrid according to an embodiment of this application;
FIG. 2 is a diagram of an application scenario of synchronization control according to an embodiment of this application;
FIG. 3 is a diagram of another application scenario of synchronization control according to an embodiment of this application;
FIG. 4 is a diagram of an architecture of a microgrid power supply system according to an embodiment of this application;

FIG. 5 is a diagram of another architecture of a microgrid power supply system according to an embodiment of this application;

FIG. 6 is an example diagram of the microgrid power supply system shown in FIG. 5 according to an embodiment of this application;

FIG. 7 is a flowchart of a microgrid synchronization control method according to an embodiment of this application;

FIG. 8 is a flowchart of another microgrid synchronization control method according to an embodiment of this application;

FIG. 9 is a flowchart of another microgrid synchronization control method according to an embodiment of this application;

FIG. 10 is a schematic flowchart of synchronization control based on the microgrid power supply system shown in FIG. 6 according to an embodiment of this application;

FIG. 11 is a diagram of a phase jump and an instantaneous voltage jump based on the microgrid power supply system shown in FIG. 6 according to an embodiment of this application; and

FIG. 12 is a diagram of a structure of a controller according to an embodiment of this application.

## DESCRIPTION OF EMBODIMENTS

To make objectives, technical solutions, and advantages of embodiments of this application clearer, the following further describes implementations of this application in detail with reference to the accompanying drawings.

Before embodiments of this application are described, a concept and an application scenario in embodiments of this application are first described.

A microgrid is an electrical grid that includes a distributed power generation device, a power-consuming load, a monitoring/protection apparatus, an automation apparatus, and the like, and may further include an energy storage device in some scenarios. The microgrid is a small-scale power grid that can achieve a basic balance of internal electricity and power. The microgrid can run with an external power grid (referred to as an external grid for short below) in a grid-connected mode, that is, the microgrid supplies power by using the external grid. The microgrid can also independently run in an off-grid mode (also referred to as running in an island mode), that is, the microgrid supplies power by using a power generation device in the microgrid..

Synchronization means that voltages on two sides of a switch have substantially equal amplitudes, substantially equal frequencies, and substantially equal phases.

In an electrochemical energy storage system, a power conversion system (power conversion system, PCS) is a converter that is connected between a battery system and a power grid and/or connected between a battery system and a power-consuming load and that implements bidirectional conversion of electric energy.

Points of common coupling (points of common coupling, PCCs) are joints of a plurality of power-consuming loads in a microgrid.

A microgrid central controller (microgrid central controller, MGCC) is a controller configured to control a microgrid.

Port characteristics of a virtual synchronous generator (virtual synchronous generator, VSG) behave as generating power by a synchronous generator.

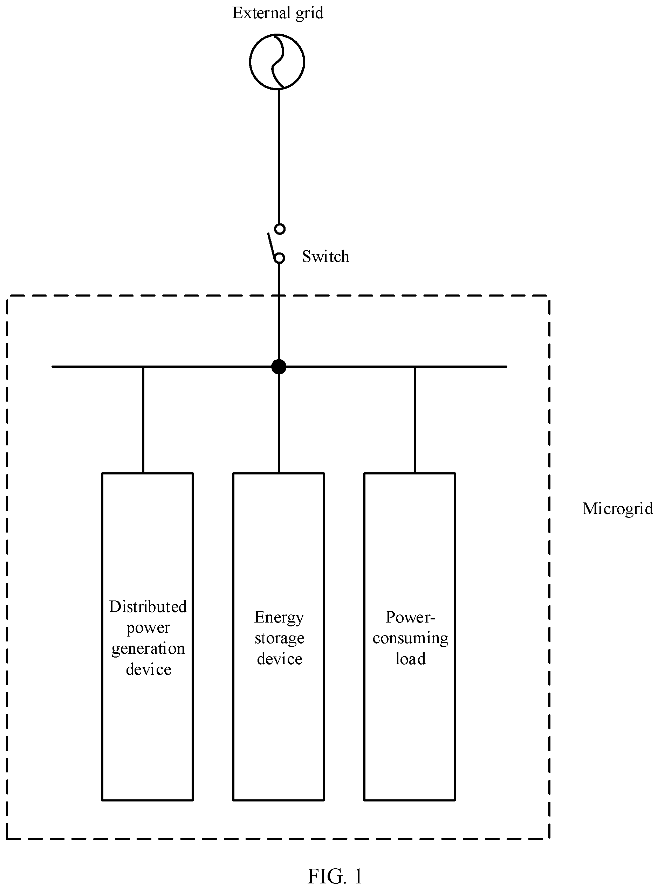

FIG. 1 is a diagram of a structure of a microgrid according to an embodiment of this application. As shown in FIG. 1, the microgrid includes a distributed power generation device, an energy storage device, and a power-consuming load. When a switch between the microgrid and an external grid is turned off, the microgrid is in an off-grid running state, which is also referred to as running in an island mode. In this case, the distributed power generation device and/or the energy storage device in the microgrid supplies power to the power-consuming load. When the switch between the microgrid and the external grid is turned on, the microgrid is in a grid-connected running state. In this case, the external grid supplies power to the power-consuming load in the microgrid.

When a circuit fault occurs or a part of generated power is suddenly lost, resulting in insufficient energy supply, the microgrid shown in FIG. 1 needs to be quickly connected to the external grid through synchronization control to transfer power supply for the power-consuming load, to ensure power supply reliability.

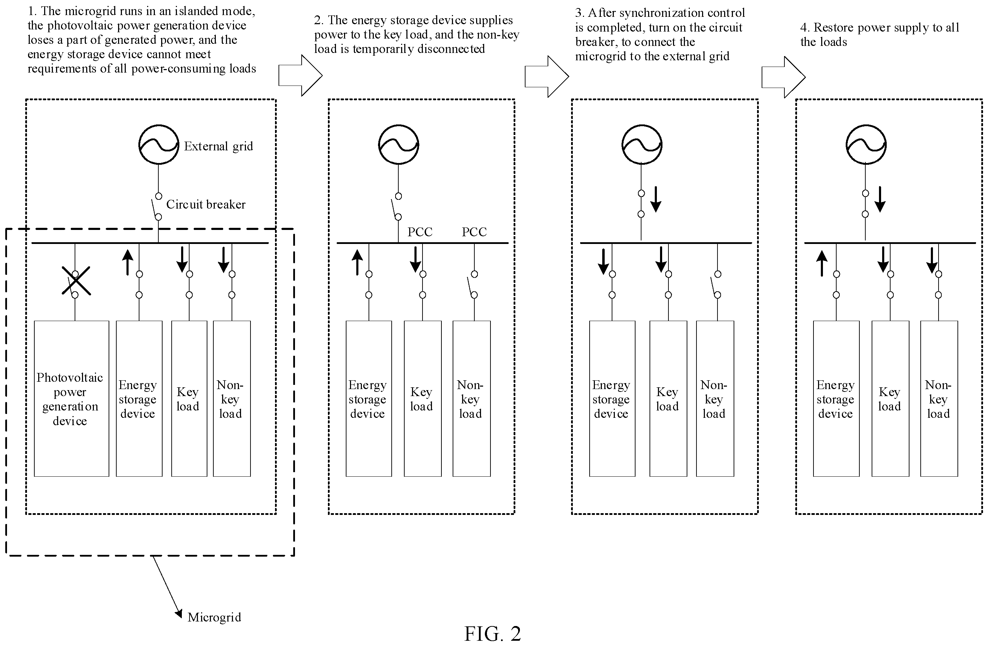

FIG. 2 is a diagram of an application scenario of synchronization control according to an embodiment of this application. FIG. 2 includes a microgrid and an external grid. A circuit breaker is disposed between the microgrid and the external grid. The microgrid in this scenario may be referred to as a grid-connected microgrid. Before the circuit breaker between the microgrid and the external grid is turned on, the microgrid runs in an island mode. That is, a power generation device such as a photovoltaic power generation device in the microgrid supplies power to a power-consuming load.

As shown in FIG. 2, when the microgrid runs in the island mode, and the power generation device such as a photovoltaic power generation device in the microgrid suddenly loses a part of generated power, an energy storage device in the microgrid needs to supply power to all power-consuming loads. However, the energy storage device cannot meet requirements of all the power-consuming loads. Therefore, in this case, the energy storage device temporarily supplies power to a key power-consuming load, and a non-key power-consuming load is temporarily turned off, to maintain a power balance in the microgrid. In FIG. 2, the key power-consuming load is referred to as a key load for short, and a non-key power-consuming load is referred to as a non-key load for short. The microgrid performs synchronization control. After the synchronization control is completed, the circuit breaker is turned on (that is, switched on), to connect the microgrid to the external grid. This quickly restores power supply to all the power-consuming loads.

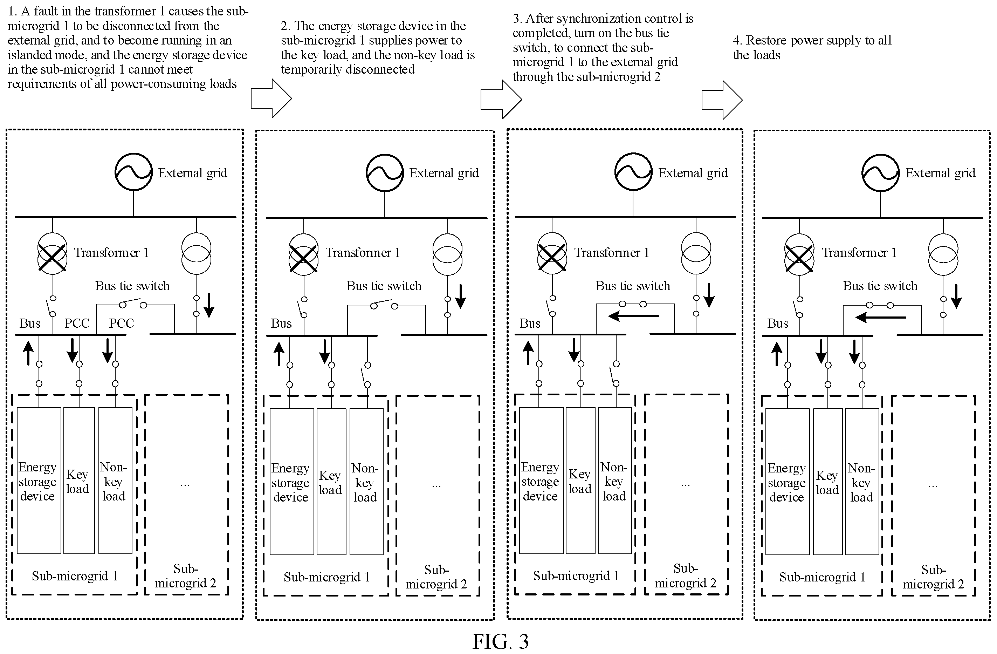

FIG. 3 is a diagram of another application scenario of synchronization control according to an embodiment of this application. FIG. 3 includes a plurality of sub-microgrids (referred to as sub-microgrids for short below) that run in parallel and one external grid. The plurality of sub-microgrids form a microgrid group. In FIG. 3, two sub-microgrids are used as an example, and the two sub-microgrids are marked as: a sub-microgrid 1 and a sub-microgrid 2. Each sub-microgrid is connected to the external grid through a transformer, and a bus tie switch is connected between adjacent sub-microgrids. For the sub-microgrid 1, when a transformer 1 between the sub-microgrid 1 and the external grid is currently disconnected due to a fault, that is, the sub-microgrid 1 cannot supply power by using the external grid, an energy storage device in the sub-microgrid 1 needs to supply power to all the power-consuming loads. However, the energy storage device cannot meet requirements of all the power-consuming loads. Therefore, in this case, the energy storage device in the sub-microgrid 1 temporarily supplies power to the key power-consuming load, the non-key power-consuming load is temporarily turned off, and quick synchronization control is performed. After synchronization control is completed, the bus tie switch is turned on, to connect to the adjacent sub-microgrid 2, so that the external grid is connected through the adjacent sub-microgrid 2, to quickly restore a power supply process of all the power-consuming loads in the sub-microgrid 1.

For ease of subsequent description, a side that is of the circuit breaker in FIG. 2 and that is connected to a PCC of the microgrid or a side that is of the bus tie switch in FIG. 3 and that is connected to a PCC of the sub-microgrid is referred to as a "microgrid side", and a side that is of the circuit breaker in FIG. 2 or the bus tie switch in FIG. 3 and that is connected to the external grid is referred to as an "external grid side".

In the scenario shown in FIG. 2 or FIG. 3, to ensure that a large overshoot and oscillation do not occur on a system voltage in a switch-on process, synchronization control needs to ensure that when the synchronization control is completed, an amplitude difference, a frequency difference, and a phase difference that are between voltages on two sides of the circuit breaker or the bus tie switch that is to be switched on are adjusted to be within very narrow ranges. That is, high-precision synchronization control is implemented.

For a microgrid using a PCS as a grid-forming (grid-forming) power supply, in a synchronization process, the PCS that is uniformly adjusted and controlled by an MGCC is responsible for adjusting an amplitude, a frequency, and a phase of a voltage at the PCC on the microgrid side. In this way, the amplitude, frequency, and phase of the voltage on the microgrid side are synchronized with those of a voltage on the external grid side. The MGCC adjusts and controls, in a closed-loop control manner, an amplitude, a frequency, and a phase of a voltage output by the PCS. The PCS provides specific inertia and damping. Therefore, it is difficult to achieve a large frequency variation and rate of change of frequency (rate of change of frequency, RoCoF) in a short period of time in a closed-loop control process, which leads to a low speed of synchronization control.

Based on this, embodiments of this application provide a microgrid synchronization control method, so that when a power generation capability of the microgrid cannot meet a requirement of a local power-consuming load because a large amount of generated power is suddenly lost or a fault occurs, the microgrid that originally runs in the island mode is connected to the external grid by using a synchronization control technology. This implements quick transfer of power supply for the power-consuming load, that is, improves a speed of synchronization control, which reduces power-off time of the power-consuming load in the microgrid, and further ensures power supply reliability of the microgrid.

The following describes a microgrid power supply system, a microgrid synchronization control method, and a related product that are provided in embodiments of this application.

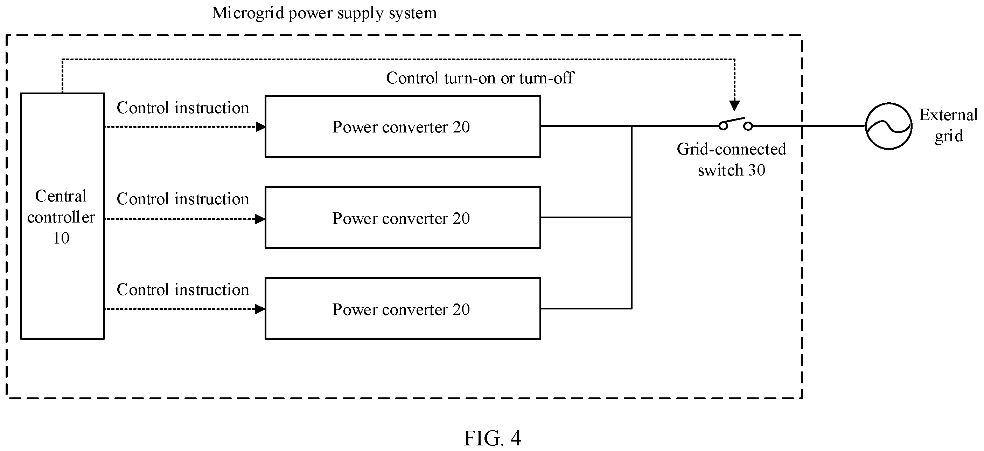

FIG. 4 is a diagram of an architecture of the microgrid power supply system according to an embodiment of this application. As shown in FIG. 4, the system includes a central controller 10, at least one power converter 20, and a grid connection switch 30. The grid connection switch 30 is connected between the at least one power converter 20 and a power grid. The power grid is the foregoing external power grid, and in FIG. 4, the power grid is marked as an external grid. In addition, in FIG. 4, three power converters are used as an example for description. A quantity of power converters in the microgrid power supply system is not limited in embodiments of this application.

The power converter 20 is, for example, connected between the energy storage device and the power-consuming load in the microgrid shown in FIG. 1, to control power supply by the energy storage device to the power-consuming load.

In addition, the central controller 10 is separately connected to at least one power converter 20, to send a control instruction to each power converter, and further adjust a voltage output by the power converter 20. The central controller 10 is further connected to the grid connection switch 30, to control the grid connection switch 30 to be turned on or turned off.

For example, the central controller 10 is configured to: in a scenario in which the at least one power converter 20 needs to supply power by using the power grid, adjust a voltage between the at least one power converter 20 and the grid connection switch 30, to implement synchronization control of voltages on two sides of the grid connection switch 30. In addition, when the voltages on the two sides of the grid connection switch 30 meet a synchronization control condition, the grid connection switch 30 is controlled to be switched on, so that the power grid supplies power to the at least one power converter 20.

In the microgrid power supply system provided in this embodiment of this application, the central controller 10 may directly send a phase difference between the voltages on the two sides of the grid connection switch 30 to the at least one power converter 20. The power converter 20 directly compensates for a phase of the voltage between the power converter 20 and the grid connection switch 30, instead of compensating for, by the central controller, the phase of the voltage between the power converter 20 and the grid connection switch 30 in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

The central controller 10 and the at least one power converter 20 may be components in the microgrid in the scenario shown in FIG. 2. In this case, the grid connection switch 30 may be the circuit breaker in FIG. 2. Optionally, the central controller 10 and the at least one power converter 20 may be components in the sub-microgrid in the scenario shown in FIG. 3. In this case, the grid connection switch 30 may be the bus tie switch in FIG. 3.

It should be noted that the central controller 10 and the power converter 20 in FIG. 4 may be integrated into a same device, or optionally may be deployed in different devices in a distributed manner. This is not limited in embodiments of this application.

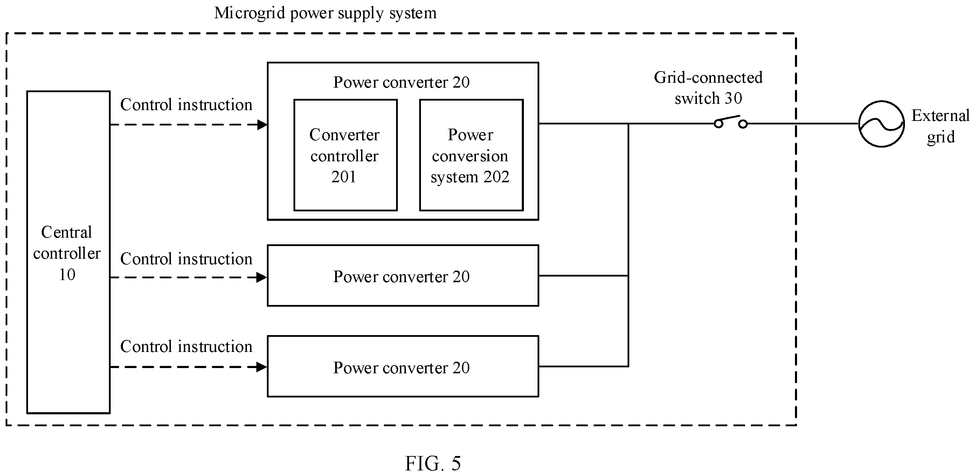

In addition, in some embodiments, as shown in FIG. 5, each power converter 20 includes a converter controller 201 and a power conversion system 202.

An input end of the power conversion system 202 is configured to connect to the energy storage device in the microgrid power supply system. An output end of the power conversion system 202 is connected to the grid connection switch 30. A control end of the power conversion system 202 is connected to an output end of the converter controller 201. An input end of the converter controller 201 is connected to the central controller 10. FIG. 5 does not show a connection relationship between the converter controller 201 and the power conversion system 202.

In the power supply system shown in FIG. 5, the central controller 10 may directly send the phase difference of the voltages on the two sides of the grid connection switch 30 to the converter controller 201, and the converter controller 201 directly compensates for a phase of a voltage between the power conversion system 202 and the grid connection switch 30, instead of compensating for, by the central controller, the phase of the voltage between the power conversion system 202 and the grid connection switch 30 in a phase closed-loop control manner.

The power conversion system 202 may be, for example, a PCS, and the converter controller 201 may be, for example, a PCS local controller.

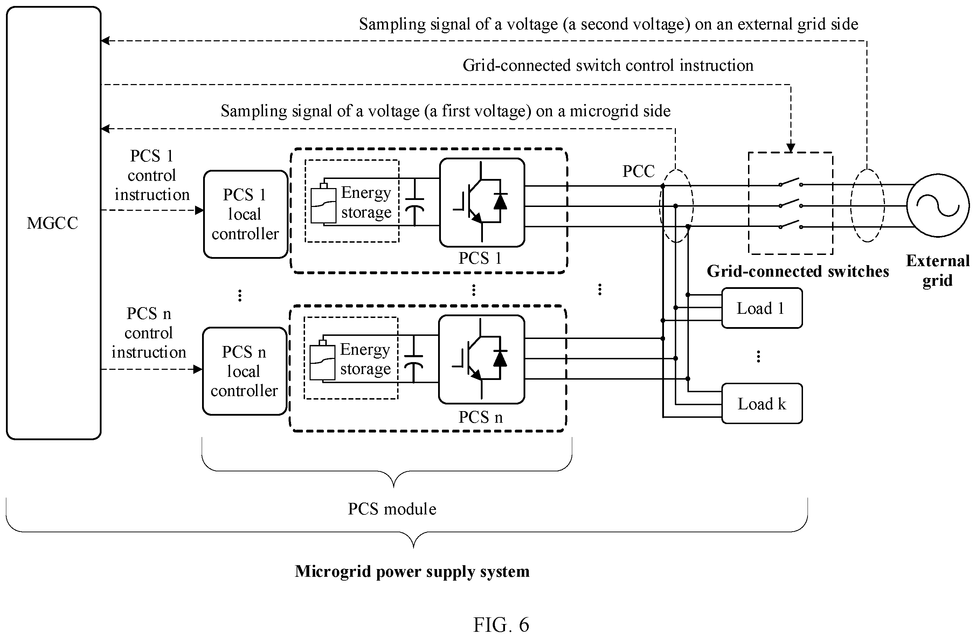

FIG. 6 is an example diagram of the microgrid power supply system shown in FIG. 5 according to an embodiment of this application. As shown in FIG. 6, the microgrid power supply system includes an MGCC, one or more PCS modules, one or more power-consuming loads, and a grid connection switch. The MGCC serves as the central controller shown in FIG. 5.

As shown in FIG. 6, each PCS module includes a PCS local controller, a PCS, and an energy storage device (the energy storage device is marked as energy storage in FIG. 6). In FIG. 6, PCSs in PCS modules are sequentially marked as a PCS 1 to a PSC n, and PCS local controllers in the PCS modules are sequentially marked as a PCS 1 local controller to a PSC n local controller.

A control end of the PCS in each PCS module is connected to the PCS local controller, an input end of the PCS is connected to the energy storage device, and an output end of the PCS is connected to the one or more power-consuming loads that are respectively marked as a load 1 to a load k in FIG. 6. k is greater than or equal to 1.

As shown in FIG. 6, the power-consuming load 1 to the power-consuming load k are respectively connected to output ends of the PCSs, to supply power to the power-consuming load 1 to the power-consuming load k by using the one or more PSC modules. Positions at which the power-consuming load 1 to the power-consuming load k are connected to the output ends of the PCSs may be referred to as PCCs.

As shown in FIG. 6, grid connection switches are disposed between the external grid and the power-consuming load 1 to the power-consuming load k. A position between the grid connection switch and the PCC is referred to as a microgrid side of the grid connection switch, and a position between the grid connection switch and the external grid is referred to as an external grid side of the grid connection switch.

In the microgrid power supply system shown in FIG. 6, when determining that synchronization control currently needs to be performed, the MGCC may collect a signal of a voltage (marked as a sampling signal of a voltage on the external grid side in FIG. 6) on the external grid side of the grid connection switch and a signal of a voltage (marked as a sampling signal of a voltage on the microgrid side in FIG. 6) on the microgrid side of the grid connection switch, and send a PCS control instruction to the PCS local controller based on a difference between the two voltage signals, to adjust an amplitude, a frequency, and a phase of a voltage at the output end of the PCS, that is, an amplitude, a frequency, and a phase of a voltage at the PCC. As shown in FIG. 6, the MGCC sends a PCS 1 control instruction to the PCS 1 local controller, ..., and sends a PCS n control instruction to the PCS n local controller, so that each PCS local controller adjusts a voltage at an output end of a corresponding PCS.

In this embodiment of this application, the PCS control instruction sent by the MGCC to the PCS local controller carries a phase difference between a voltage on the microgrid side and a voltage on the external grid side. This helps the PCS local controller directly compensate for, based on the phase difference, a phase of a voltage output by the PSC, which improves a speed of synchronization control.

When detecting that the voltage signal on the external grid side of the grid connection switch and the voltage signal on the microgrid side of the grid connection switch meet a synchronization control condition, the MGCC sends a grid connection switch control instruction to the grid connection switch, to control the grid connection switch to be switched on.

The following explains and describes the microgrid synchronization control method provided in embodiments of this application.

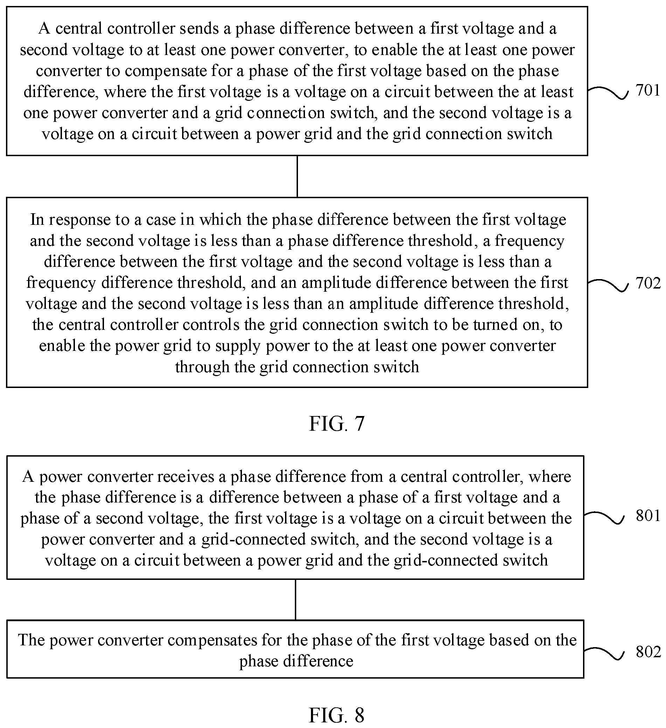

FIG. 7 is a flowchart of a microgrid synchronization control method according to an embodiment of this application. The method is applied to the central controller shown in FIG. 4 or FIG. 5, and is applied to, for example, the MGCC shown in FIG. 6. As shown in FIG. 6, the method includes the following several steps.

**Step 701:** The central controller sends a phase difference between a first voltage and a second voltage to at least one power converter, to enable the at least one power converter to compensate for a phase of the first voltage based on the phase difference, where the first voltage is a voltage on a circuit between the at least one power converter and a grid connection switch, and the second voltage is a voltage on a circuit between a power grid and the grid connection switch.

**Step 702:** In response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, the central controller controls the grid connection switch to be turned on, to enable the power grid to supply power to the at least one power converter through the grid connection switch.

In this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

FIG. 8 is a flowchart of another microgrid synchronization control method according to an embodiment of this application. The method is applied to the power converter shown in FIG. 4 or FIG. 5, and is applied to, for example, any PCS local controller in the microgrid shown in FIG. 6. As shown in FIG. 8, the method includes the following several steps.

**Step 801:** The power converter receives a phase difference from a central controller, where the phase difference is a difference between a phase of a first voltage and a phase of a second voltage, the first voltage is a voltage on a circuit between the power converter and a grid connection switch, and the second voltage is a voltage on a circuit between a power grid and the grid connection switch.

**Step 802:** The power converter compensates for the phase of the first voltage based on the phase difference.

In this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

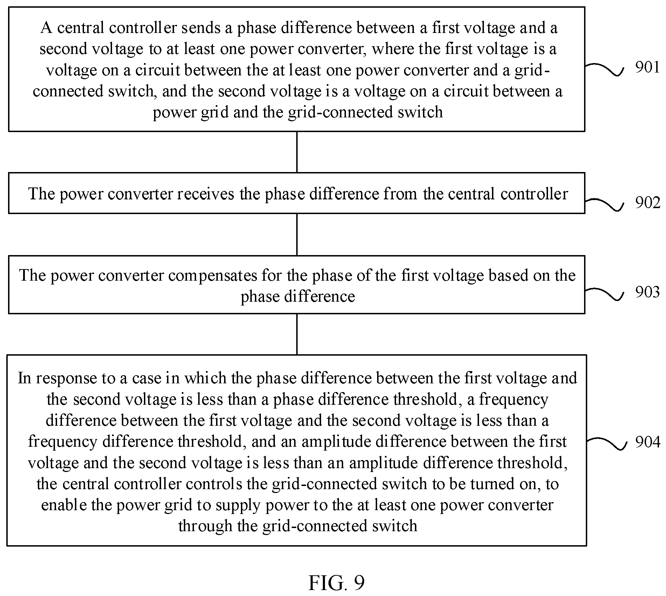

FIG. 9 is a flowchart of another microgrid synchronization control method according to an embodiment of this application. The method is applied to the microgrid power supply system shown in any one of FIG. 4 to FIG. 6. As shown in FIG. 9, the method includes the following several steps.

**Step 901:** A central controller sends a phase difference between a first voltage and a second voltage to at least one power converter, where the first voltage is a voltage on a circuit between the at least one power converter and a grid connection switch, and the second voltage is a voltage on a circuit between a power grid and the grid connection switch.

In some embodiments, before sending the phase difference between the first voltage and the second voltage to the power converter, the central controller may further obtain the phase difference between the first voltage and the second voltage in response to a synchronization control instruction.

The synchronization control instruction may be triggered by operation and maintenance personnel through a specified operation on the central controller. For example, in some scenarios, for example, in a test scenario, when the operation and maintenance personnel need to use the power grid to supply power to a power-consuming load in a microgrid, the operation and maintenance personnel may trigger the synchronization control instruction through a user interaction interface provided by the central controller.

In some other embodiments, the central controller may further detect an actual power of the power-consuming load in the microgrid in real time. When detecting that the actual power of the power-consuming load in the microgrid does not reach a rated power of the power-consuming load in the microgrid, the central controller may automatically perform an operation of obtaining the phase difference between the first voltage and the second voltage.

In addition, in some embodiments, the central controller may collect voltage information of the first voltage and voltage information of the second voltage. The voltage information indicates a case in which an instantaneous voltage of a corresponding voltage changes with time. The central controller determines the phase difference based on the voltage information of the first voltage and the voltage information of the second voltage.

For example, an implementation in which the central controller determines the phase difference based on the voltage information of the first voltage and the voltage information of the second voltage may be as follows: separately processing the voltage information of the first voltage and the voltage information of the second voltage by using a phase-locked loop (phase-locked loop, PLL) circuit, to obtain a phase of the first voltage and a phase of the second voltage; and determining the phase difference between the first voltage and the second voltage based on the phase of the first voltage and the phase of the second voltage.

The PLL circuit is a circuit that implements frequency and phase control by using a feedback (feedback) technology. Therefore, the PLL circuit may also be referred to as a PLL integrator. Precision of a phase determined by using the PLL circuit is high.

A principle of determining a phase of a voltage by using the PLL circuit may be as follows: The voltage is used as a reference signal, a phase of an input signal of the PLL circuit and a phase of the reference signal are compared to obtain a phase difference; and a frequency and a phase of an output signal of the PLL circuit are adjusted through feedback control. In this way, the output signal is synchronized with the reference signal, and a phase of an adjusted output signal is the phase of the voltage.

For another example, an implementation in which the central controller determines the phase difference based on the voltage information of the first voltage and the voltage information of the second voltage may be as follows: separately performing Clarke (Clarke) transformation on the voltage information of the first voltage and the voltage information of the second voltage, to obtain a first Clark transformation result and a second Clark transformation result; and calculating the phase difference between the first voltage and the second voltage based on the first Clarke transformation result and the second Clarke transformation result.

A response to feedback control of the PLL circuit is slow, and consequently, a speed of synchronization control is affected. In consideration of this, this embodiment of this application further provides a phase difference calculation method that is based on Clarke transformation on an instantaneous voltage. In the phase difference calculation method that is based on Clark transformation on an instantaneous voltage, the phase difference does not need to be determined through feedback control. Therefore, a speed of determining the phase difference is faster, and the phase difference calculation method is more conducive to improving the speed of synchronization control.

For example, $u_{grid\_\alpha}$ and $u_{grid\_\beta}$ respectively represent components of an instantaneous value of the second voltage in a $\alpha\beta$ coordinate system; $u_{PCC\_\alpha}$ and $u_{PCC\_\beta}$ respectively represent components of an instantaneous value of the first transformer voltage in the $\alpha\beta$ coordinate system; $V_{grid}$ and $V_{PCC}$ respectively represent an instantaneous amplitude of the second voltage and an instantaneous amplitude of the first voltage; and $\theta_{ygrid}$ and $\theta_{PCC}$ respectively represent the phase of the second voltage and the phase of the first voltage. In this case, relationships between these parameters may be represented by using the following formula, and in the following formula, a first row and a second row are the second Clarke transformation result, and a third row and a fourth row are the first Clarke transformation result:

$$\begin{cases} u_{grid\_\alpha} = \sqrt{3}V_{grid}\cos\left(\omega t + \theta_{grid}\right) \\ u_{grid\_\beta} = \sqrt{3}V_{grid}\sin\left(\omega t + \theta_{grid}\right) \\ u_{PCC\_\alpha} = \sqrt{3}V_{pcc}\cos\left(\omega t + \theta_{PCC}\right) \\ u_{PCC\_\beta} = \sqrt{3}V_{pcc}\sin\left(\omega t + \theta_{PCC}\right) \end{cases}$$

The phase difference between the first voltage and the second voltage can be obtained by using the foregoing formula. The phase difference is represented as $V\theta$, and $V\theta$ may be represented by using the following formula:

$$\Delta\theta = \mathrm{atan}\,2\left(\frac{A}{\sqrt{A^2+B^2}}, \frac{B}{\sqrt{A^2+B^2}}\right)$$

In the foregoing formula, atan2() is a built-in function of a C language function library. Parameters *A* and *B* may be represented by using the following formula:

$$\begin{cases} A = u_{grid\_\beta} u_{PCC\_\alpha} - u_{grid\_\alpha} u_{PCC\_\beta} \\ B = u_{grid\_\alpha} u_{PCC\_\alpha} + u_{grid\_\beta} u_{PCC\_\beta} \end{cases}$$

In the foregoing formula for determining the first Clarke transformation result and the second Clarke transformation result, there is no need to assume that a voltage amplitude of the first voltage and that of the second voltage are equal. Therefore, calculation precision is higher, and the phase difference calculation method is more conducive to improving the speed of synchronization control.

It should be noted that the foregoing two implementations are used as examples to describe how to determine the phase difference between the first voltage and the second voltage. An implementation of how to determine the phase difference between the first voltage and the second voltage is not limited in embodiments of this application. Examples are not described one by one herein.

Optionally, another device may alternatively collect the voltage information of the first voltage and the voltage information of the second voltage, determine the phase difference between the first voltage and the second voltage, and then send the phase difference to the central controller. This can reduce data processing pressure of the central controller.

In addition, in this embodiment of this application, to ensure precision of synchronization control while improving the speed of synchronization control, the central controller may further obtain a frequency difference between the first voltage and the second voltage, and/or obtain an amplitude difference between the first voltage and the second voltage. In this way, when the power converter subsequently compensates for the phase of the first voltage in a direct phase difference compensation manner, the central controller may further perform high-precision control over the amplitude difference, the frequency difference, and the phase difference between the first voltage and the second voltage in a closed-loop control manner. Therefore, this embodiment of this application further provides a synchronization control solution that achieves both the precision of synchronization control and the speed of synchronization control.

For example, in the microgrid power supply system shown in FIG. 6, the MGCC receives and stores an instantaneous sampling value of the first voltage (that is, the voltage that is of the grid connection switch and that is on the microgrid side) and an instantaneous sampling value of the second voltage (that is, the voltage that is of the grid connection switch and that is on the external grid side), that is, the voltage information of the first voltage and the voltage information of the second voltage. For ease of subsequent description, the voltage information of the first voltage is represented as $v_{PCC}(k)$, and the voltage information of the second voltage is represented as $v_{grid}(k)$.

The MGCC separately calculates a phase of the first voltage and a phase of the second voltage at a current moment based on $v_{PCC}(k)$ and $v_{grid}(k)$ by using the PLL circuit. The phase of the first voltage is represented as $\theta_{PCC}(k)$, and the phase of the second voltage is represented as $\theta_{grid}(k)$. The MGCC separately calculates a frequency of the first voltage and a frequency of the second voltage at the current moment based on $v_{PCC}(k)$ and $v_{grid}(k)$ by using a technology such as the PLL circuit or a discrete Fourier transform (discrete Fourier transform, DFT) circuit. The frequency of the first voltage is represented as $f_{PCC}(k)$, and the frequency of the second voltage is represented as $f_{grid}(k)$. The MGCC separately calculates an amplitude of the first voltage and an amplitude of the second voltage at the current moment based on $v_{PCC}(k)$ and $v_{grid}(k)$ by using an algorithm such as root mean square (root mean square, RMS). The amplitude of the first voltage is represented as $V_{PCC}(k)$, and the amplitude of the second voltage is represented as $V_{grid}(k)$.

Based on the foregoing calculation results, the MGCC separately calculates a phase difference, a frequency difference, and an amplitude difference that are at the current moment and that are between the first voltage and the second voltage. The phase difference is represented as $V\theta(k)$, the frequency difference is represented as $Vf(k)$, and the amplitude difference is represented as $VV(k)$. In this case, the phase difference, the frequency difference, and the amplitude difference may be represented by using the following formula:

$$\begin{cases} \Delta\theta(k) = \theta_{grid}(k) - \theta_{PCC}(k) \\ \Delta f(k) = f_{grid}(k) - f_{PCC}(k) \\ \Delta V(k) = V_{grid}(k) - V_{PCC}(k) \end{cases}$$

The foregoing manners of determining the frequency difference and the amplitude difference are all used as examples for description. This is not limited in embodiments of this application.

In addition, it can be learned, based on the foregoing content, that the central controller may further obtain the frequency difference between the first voltage and the second voltage. In this scenario, the central controller determines a reference active power based on the phase difference and the frequency difference. The central controller sends the reference active power to the at least one power converter, to enable the at least one power converter to adjust the phase of the first voltage based on the reference active power. That is, the phase of the first voltage is adjusted in the closed-loop manner.

In addition, it can be learned, based on the foregoing content, that the central controller may further obtain the amplitude difference between the first voltage and the second voltage. In this scenario, the central controller determines a reference reactive power based on the phase difference and the amplitude difference. The central controller sends the reference reactive power to the at least one power converter, to enable the at least one power converter to adjust the amplitude of the first voltage based on the reference reactive power. That is, the amplitude of the first voltage is adjusted in the closed-loop manner.

The following uses the microgrid power supply system shown in FIG. 6 as an example for description.

The MGCC respectively performs phase closed-loop control, frequency closed-loop control, and amplitude closed-loop control over the first voltage based on the phase difference, the frequency difference, and the amplitude difference that are between the first voltage and the second voltage and that are obtained through calculation, and combines output results obtained through the closed-loop control into an active power and a reactive power, and transfers the active power and reactive power to the PCS local controller.

Phase closed-loop control, frequency closed-loop control, and amplitude closed-loop control of the first voltage may be separately implemented by using a proportional-integral controller. Inputs of the proportional-integral controller are: the phase difference V$\theta$(k), the frequency difference V$f$(k), and the amplitude difference VV(k) that are at the current moment and that are between the first voltage and the second voltage. An output of the proportion-integral controller obtained after phase closed-loop control is performed is represented as $P_\theta$(k), an output of the proportion-integral controller obtained after frequency closed-loop control is performed is represented as $P_f$(k), and an output of the proportion-integral controller obtained after amplitude closed-loop control is performed is represented as Q$_V$(k). In this case, a closed-loop control process may be represented by using the following formula:

$$\begin{cases} P_\theta\left(k\right) = K_{p\_\theta}\Delta\theta\left(k\right) + K_{i\_\theta} \cdot T_{s\_MGCC}\sum_i \Delta\theta\left(i\right) \\ P_f\left(k\right) = K_{p\_f}\Delta f\left(k\right) + K_{i\_f} \cdot T_{s\_MGCC}\sum_i \Delta f\left(i\right) \\ Q_V\left(k\right) = K_{p\_V}\Delta V\left(k\right) + K_{i\_V} \cdot T_{s\_MGCC}\sum_i \Delta V\left(i\right) \end{cases}$$

$T_{s\_MGCC}$ represents a control period of the MGCC; $K_{p\_\theta}$ and $K_{i\_\theta}$ respectively represent a proportion coefficient and an integral coefficient of phase closed-loop control; $K_{p\_f}$ and $K_{i\_f}$ respectively represent a proportion coefficient and an integral coefficient of frequency closed-loop control; and $K_{p\_V}$ and $K_{i\_V}$ respectively represent a proportion coefficient and an integral coefficient of amplitude closed-loop control.

The MGCC may determine the reference active power and the reference reactive power by using the following formula, and transfer the reference active power and the reference reactive power to the PCS local controller. In this way, the PCS local controller uses the received reference active power and the reference reactive power as a reference value of the active power and a reference value of the reactive power that are at the current moment and that are for a VSG controlled PCS.

$$\begin{cases} P_{ref}\left(k\right) = P_\theta\left(k\right) + P_f\left(k\right) \\ Q_{ref}\left(k\right) = Q_V\left(k\right) \end{cases}$$

$P_{ref}$(k) represents the reference active power, and $Q_{ref}$(k) represents the reference reactive power.

It should be noted that the foregoing manner is used to describe a manner of determining the reference active power and the reference reactive power by using an example. The manner of determining the reference active power and the reference reactive power is not limited in embodiments of this application. Examples are not described one by one herein.

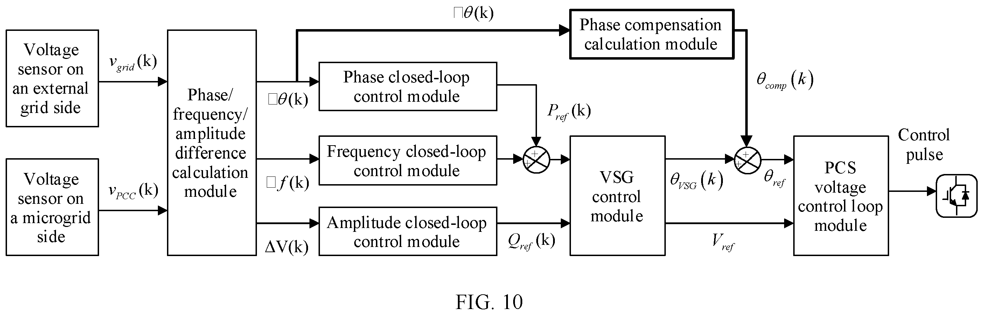

FIG. 10 is a schematic flowchart of synchronization control based on the microgrid power supply system shown in FIG. 6 according to an embodiment of this application. As shown in FIG. 10, the MGCC includes a phase/frequency/amplitude difference calculation module, a phase closed-loop control module, a frequency closed-loop control module, and an amplitude closed-loop control module. The modules are all software modules. The phase/frequency/amplitude difference calculation module is configured to: obtain the voltage information $v_{PCC}$(k) of the first voltage collected by a voltage sensor on the microgrid side and the voltage information $v_{grid}$(k) of the second voltage collected by a voltage sensor on the external grid side, and determine, based on the two pieces of voltage information, the phase difference V$\theta$(k), the frequency difference V$f$(k), and the amplitude difference VV(k) that are between the first voltage and the second voltage.

After obtaining the phase difference V$\theta$(k), the phase/frequency/amplitude difference calculation module sends the phase difference V$\theta$(k) to the PCS local controller, so that the PCS local controller directly compensates for the phase of the first voltage based on the phase difference V$\theta$(k).

In addition, the phase/frequency/amplitude difference calculation module further sends the phase difference V$\theta$(k), the frequency difference V$f$(k), and the amplitude difference VV(k) to the phase closed-loop control module, the frequency closed-loop control module, and the amplitude closed-loop control module, respectively. The phase closed-loop control module performs phase closed-loop control based on the phase difference V$\theta$(k), the frequency closed-loop control module performs frequency closed-loop control based on the frequency difference V$f$(k), and the amplitude closed-loop control module performs amplitude closed-loop control based on the amplitude difference V$V$(k). An output result of the phase closed-loop control module and an output result of the frequency closed-loop control module are combined into the reference active power $P_{ref}$(k) that is sent to the PCS local controller. An output result of the amplitude closed-loop control module is used as the reference reactive power $Q_{ref}$(k) that is sent to the PCS local controller.

**Step 902:** The power converter receives the phase difference from the central controller.

For example, in the microgrid power supply system shown in FIG. 5, the converter controller receives the phase difference.

For example, in the microgrid power supply system shown in FIG. 6, the PCS local controller in each PCS module receives the phase difference.

**Step 903:** The power converter compensates for the phase of the first voltage based on the phase difference.

In some embodiments, an implementation in which the power converter compensates for the phase of the first voltage based on the phase difference may be as follows: superimposing the phase difference on a reference phase of the first voltage, to obtain a compensated reference phase; and adjusting, based on the compensated reference phase, the phase of the first voltage in a closed-loop control manner.

For example, for the system shown in FIG. 6, the MGCC outputs, to each PCS local controller, the phase difference that is between the first voltage and the second voltage and that is obtained through calculation. The PCS local controller adjusts a reference phase of an output voltage of the PCS based on the received phase difference, and controls the output voltage of the PCS based on an adjusted reference phase.

The phase difference is directly superimposed on the reference phase of the first voltage, which directly compensates for the reference phase of the first voltage. Compared with a solution of adjusting the reference phase in the closed-loop control manner, a solution of directly compensating for the reference phase can quickly adjust the phase of the first voltage.

For ease of understanding, a principle of the PCS local controller is described herein. In this embodiment of this application, as shown in FIG. 10, the PCS local controller includes a phase compensation calculation module, a VSG control module, and a PCS voltage control loop module. The three modules are software modules.

The VSG control module is configured to determine the reference phase and a reference amplitude of the first voltage based on the received reference active power and reference reactive power. As shown in FIG. 10, the reference phase for which the phase difference is not compensated, that is, a reference phase output by the VSG control module, is marked as $\theta_{VSG}$, and the reference amplitude output by the VSG control module is marked as $V_{ref}$. The phase compensation calculation module is configured to determine a compensation amount that currently needs to be compensated for the reference phase. As shown in FIG. 10, the compensation amount is marked as $\theta_{comp}$(k), and a reference phase for which the phase difference is compensated is marked as $\theta_{ref}$, where $\theta_{ref} = \theta_{VSG} + \theta_{comp}$(k). The PCS voltage control loop module is configured to adjust a control pulse of each device in the PCS in the closed-loop control manner, so that the output voltage of the PSC meets the reference amplitude $V_{ref}$ and the compensated reference phase $\theta_{ref}$.

In addition, to improve precision of synchronization control, when compensating for the reference phase of the first voltage based on the phase difference, the power converter may further divide the phase difference into a plurality of parts, and then separately compensate for the reference phase of the first voltage in different control periods.

Based on this, for example, the implementation in which the power converter compensates for the phase of the first voltage based on the phase difference may be as follows: dividing the phase difference into a plurality of sub-phase differences; and compensating for at least one of the plurality of sub-phase differences to the first voltage in at least one control period, respectively.

For the microgrid power supply system shown in FIG. 6, the foregoing control period is a control period of the PCS local controller. In an $i^{th}$ control period after the phase difference is received, the received reference active power and reference reactive power are converted into the reference phase $\theta_{VSG}$ and the reference amplitude $V_{ref}$ by using the VSG control module. Then, the reference phase $\theta_{VSG}$ is superposed on an $i^{th}$ sub-phase difference, to obtain the compensated reference phase $\theta_{ref}$ in a current control period. The compensated reference phase $\theta_{ref}$ and the reference amplitude $V_{ref}$ are input to the PCS voltage control loop module. The PCS voltage control loop module adjusts, based on the compensated reference phase $\theta_{ref}$ and the reference amplitude $V_{ref}$, the control pulse of each device in the PCS in the closed-loop control manner, so that the output voltage of the PSC meets the compensated reference phase $\theta_{ref}$ and the reference amplitude $V_{ref}$.

For example, it is assumed that a quantity of phase compensation times is N (N = 1, 2, 3, ...). In this case, a compensation amount $\theta_{comp}(i)$ (that is, the sub-phase difference) of the reference phase of the first voltage in each control period may be determined by using the following formula, where $T_s$ represents the control period of the PCS local controller:

$$\begin{cases} \theta_{comp}\left(i\right) = \Delta\theta\left(k\right)/N & \text{if } i = T_s, 2T_s, 3T_s, ..., NT_s \\ \theta_{comp}\left(i\right) = 0 & \text{else} \end{cases}$$

An input reference phase input to the PCS voltage control loop module may be determined by using the following formula:

$$\theta_{ref}\left(k\right) = \theta_{comp}\left(k\right) + \theta_{VSG}\left(k\right)$$

$\theta_{comp}(k)$ represents the compensated reference phase in the current control period, and $\theta_{VSG}(k)$ represents the reference phase output by the VSG control module in the current control period.

In addition, in this embodiment of this application, when receiving the phase difference between the first voltage and the second voltage, the power converter may further determine the phase difference. If the phase difference exceeds a phase difference threshold, the phase difference is divided into the plurality of sub-phase differences. Correspondingly, if the phase difference does not exceed the phase difference threshold, the phase difference does not need to be divided. This avoids a case in which when the phase difference is small, the phase difference is also divided into the plurality of sub-phase differences, which consequently reduces the speed of synchronization control.

According to the method provided in this embodiment of this application, when receiving the phase difference, the power converter may compensate for the reference phase of the first voltage for one time or a plurality of times based on the phase difference.

In addition, it can be learned from step 901 that the power converter may further receive the reference active power from the central controller. In this scenario, the power converter may further adjust the phase of the first voltage based on the reference active power.

In addition, it can be learned from step 901 that the power converter may further receive the reference reactive power from the central controller. In this scenario, the power converter may further adjust the amplitude of the first voltage based on the reference reactive power.

For the description that the power converter adjusts the phase of the first voltage based on the reference active power, and the power converter adjusts the amplitude of the first voltage based on the reference reactive power, reference may be made to functions of the VSG control module and the PCS voltage control loop module in FIG. 10. Details are not described herein again.

**Step 904:** In response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, the central controller controls the grid connection switch to be turned on, to enable the power grid to supply power to the at least one power converter through the grid connection switch.

That the power grid supplies power to the at least one power converter through the grid connection switch may be understood as follows: The power grid supplies, through the grid connection switch, power to the power-consuming load connected to the at least one power converter.

In addition, the phase difference threshold, the frequency difference threshold, and the amplitude difference threshold may be a same threshold, or may be three thresholds separately configured. This is not limited in embodiments of this application.

For example, in the microgrid power supply system shown in FIG. 6, the MGCC obtains the voltage information of the first voltage and the voltage information of the second voltage from a voltage sampling apparatus, and calculates and determines whether an absolute value of a current phase difference between the first voltage and the second voltage, an absolute value of a current frequency difference between the first voltage and the second voltage, and an absolute value of a current amplitude difference between the first voltage and the second voltage are less than set thresholds. If yes, the MGCC determines that synchronization control is completed, and sends a switch-on instruction to the grid connection switch. If no, the MGCC returns to step 901, and continues to perform synchronization control.

For example, if the phase difference threshold is represented as $\varepsilon_\theta$, the frequency difference threshold is represented as $\varepsilon_f$, and the amplitude difference threshold is represented as $\varepsilon_V$, a synchronization control condition may be represented by using the following formula:

$$\left(\left|\Delta\theta(k)\right| < \varepsilon_\theta\right) and \left(\left|\Delta f(k)\right| < \varepsilon_f\right) and \left(\left|\Delta V(k)\right| < \varepsilon_V\right)$$

It should be noted that step 903 is performed once in each control period of the power converter. If it is determined that synchronization control is not completed, step 901 is performed again in a next control period.

In conclusion, in this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

In addition, it should be noted that the power converter directly compensates for the phase of the first voltage based on the phase difference. Therefore, according to the method provided in this embodiment of this application, the reference phase of the first voltage jumps in a synchronization control process, and correspondingly, a waveform of an instantaneous voltage of the first voltage also jumps in the synchronization control process.

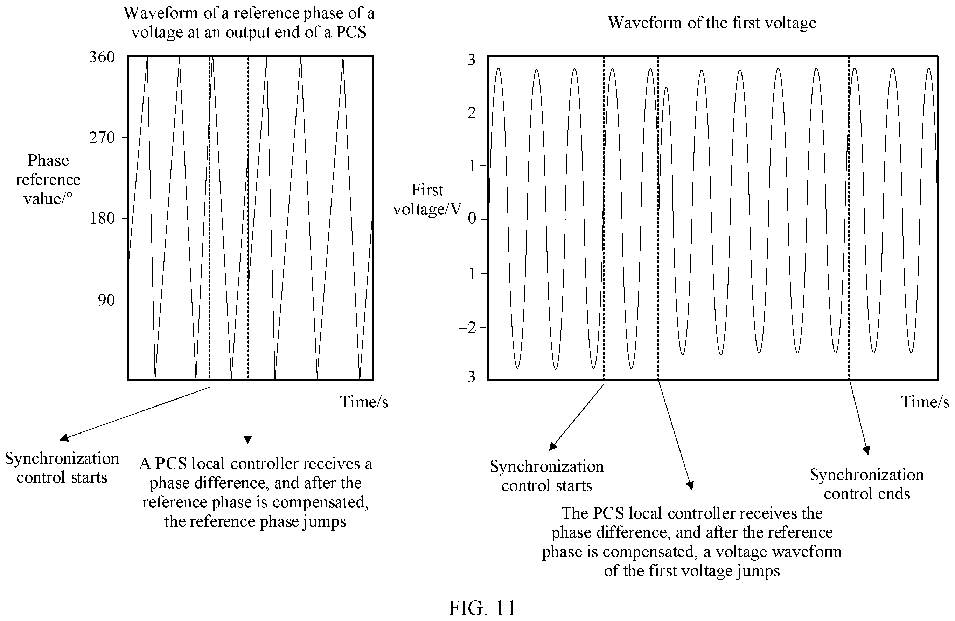

FIG. 11 is a diagram of a sudden phase change and an instantaneous voltage based on the microgrid power supply system shown in FIG. 6 according to an embodiment of this application. As shown in FIG. 11, after the PCS local controller receives the phase difference and compensates for, based on the phase difference, the reference phase output by the VSG control module, the reference phase input to the PCS voltage control loop module jumps.

As shown in FIG. 11, because the reference phase input to the PCS voltage control loop module jumps, a voltage waveform of the first voltage correspondingly jumps after the PCS voltage control loop module performs closed-loop control, but is not a continuous sine wave. It should be noted that the first voltage is a three-phase voltage, and the waveform of the first voltage in FIG. 11 is a voltage of one phase voltage. Similarly, waveforms of the other phase voltages jump after the PCS local controller compensates for the reference phase, which is not shown in FIG. 11.

In conclusion, in this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

In addition, it should be noted that the foregoing method is described by using the microgrid power supply system as an example. Optionally, the synchronization control solution provided in this application may be further applied in another scenario. For example, in a scenario in which an energy storage power station supplies power to a power grid, a switch is connected between the energy storage power station and the power grid. Before the energy storage power station is restarted and connected to the power grid, it also needs to be ensured that an amplitude difference, a phase difference, and a frequency difference that are between voltages on two sides of the switch are all less than specific thresholds. In this scenario, the method shown in FIG. 9 may be used to implement that the amplitude difference, the phase difference, and the frequency difference that are between the voltages on the two sides of the switch are less than the specific thresholds. Details are not described herein.

In addition, with reference to the microgrid power supply system shown in FIG. 4, functions of components in the microgrid power supply system are as follows.

At least one central controller is configured to send a phase difference between a first voltage and a second voltage to at least one power converter. The at least one first voltage is a voltage on a circuit between the at least one power converter and at least one grid connection switch, and the at least one second voltage is a voltage on a circuit between a power grid and the at least one grid connection switch.

The at least one power converter is configured to: receive the at least one phase difference, and compensate for a phase of the at least one first voltage based on the at least one phase difference.

The at least one central controller is further configured to: in response to a case in which a current phase difference between the at least one first voltage and the at least one second voltage is less than a phase difference threshold, a current frequency difference between the at least one first voltage and the at least one second voltage is less than a frequency difference threshold, and a current amplitude difference between the at least one first voltage and the at least one second voltage is less than an amplitude difference threshold, control the at least one grid connection switch to be turned on, to enable the at least one power grid to supply power to the at least one power converter through the at least one grid connection switch.

Optionally, the at least one central controller is further configured to: obtain a frequency difference between the first voltage and the second voltage, determine a reference active power based on the at least one phase difference and the at least one frequency difference, and send the at least one reference active power to the at least one power converter.

The at least one power converter is further configured to: receive the at least one reference active power, and adjust the phase of the at least one first voltage based on the at least one reference active power.

Optionally, the at least one central controller is further configured to: obtain an amplitude difference between the at least one first voltage and the at least one second voltage, determine a reference reactive power based on the at least one phase difference and the at least one amplitude difference, and send the at least one reference reactive power to the at least one power converter.

The at least one power converter is configured to: receive the at least one reference reactive power, and adjust an amplitude of the at least one first voltage based on the at least one reference reactive power.

Optionally, the at least one central controller is further configured to:

collect voltage information of the at least one first voltage and voltage information of the at least one second voltage, where at least one piece of the voltage information indicates a case in which an instantaneous voltage of a corresponding voltage changes with time; and
determine the at least one phase difference based on the voltage information of the at least one first voltage and the voltage information of the at least one second voltage.

Optionally, the at least one power converter is configured to:

superimpose the at least one phase difference on a reference phase of the at least one first voltage, to obtain a compensated reference phase; and
adjust, based on the compensated reference phase, the phase of the at least one first voltage in a closed-loop control manner.

Optionally, the at least one power converter is configured to:

divide the at least one phase difference into a plurality of sub-phase differences; and
compensate for at least one of the plurality of sub-phase differences to the at least one first voltage in at least one control period, respectively.

Optionally, the power converter is configured to:
if the at least one phase difference exceeds the phase difference threshold, divide the phase difference into the plurality of sub-phase differences.

For an implementation of functions of each device in the microgrid power supply system, refer to the embodiment shown in FIG. 9. Details are not described herein again.

In addition, an embodiment of this application further provides a microgrid synchronization control apparatus. The apparatus is deployed in a central controller in a microgrid power supply system. The microgrid power supply system further includes at least one power converter and a grid connection switch, and the grid connection switch is connected between the at least one power converter and a power grid. The apparatus includes the following modules.

A first sending module is configured to send a phase difference between a first voltage and a second voltage to the at least one power converter, to enable the at least one power converter to compensate for a phase of the first voltage based on the phase difference, where the first voltage is a voltage on a circuit between the at least one power converter and the grid connection switch, and the second voltage is a voltage on a circuit between the power grid and the grid connection switch. For a specific implementation, refer to step 901 in the embodiment in FIG. 9.

A control module is configured to: in response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, control the grid connection switch to be turned on, to enable the power grid to supply power to the at least one power converter through the grid connection switch. For a specific implementation, refer to step 904 in the embodiment in FIG. 9.

Optionally, the apparatus further includes:

a first obtaining module, configured to obtain the frequency difference between the first voltage and the second voltage;
a first determining module, configured to determine a reference active power based on the phase difference and the frequency difference; and
a second sending module, configured to send the reference active power to the at least one power converter, to enable the at least one power converter to adjust the phase of the first voltage based on the reference active power.

Optionally, the apparatus further includes:

a second obtaining module, configured to obtain the amplitude difference between the first voltage and the second voltage;
a second determining module, configured to determine a reference reactive power based on the phase difference and the amplitude difference; and
a third sending module, configured to send the reference reactive power to at least one power converter, to enable the at least one power converter to adjust an amplitude of the first voltage based on the reference reactive power.

Optionally, the apparatus further includes:

a collection module, configured to collect voltage information of the first voltage and voltage information of the second voltage, where the voltage information indicates a case in which an instantaneous voltage of a corresponding voltage changes with time; and
a third determining module, configured to determine the phase difference based on the voltage information of the first voltage and the voltage information of the second voltage.

In this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.

It should be noted that when the microgrid synchronization control apparatus provided in the foregoing embodiment performs synchronization control, division of the foregoing functional modules is merely used as an example for description. During actual application, the foregoing functions may be allocated to different functional modules for implementation as required. That is, an inner structure of a device may be divided into different functional modules, to implement all or some functions described above. In addition, the microgrid synchronization control apparatus provided in the foregoing embodiment and the microgrid synchronization control method embodiments pertain to a same concept. For a specific implementation process, refer to the method embodiments. Details are not described herein again.

In addition, an embodiment of this application further provides a microgrid synchronization control apparatus. The apparatus is deployed in a power converter in a microgrid power supply system. The microgrid power supply system further includes at least one power converter and a grid connection switch, and the grid connection switch is connected between the at least one power converter and a power grid. The apparatus includes the following modules.

A first receiving module is configured to receive a phase difference from a central controller, where the phase difference is a difference between a phase of a first voltage and a phase of a second voltage, the first voltage is a voltage on a circuit between the at least one power converter and the grid connection switch, and the second voltage is a voltage on a circuit between the power grid and the grid connection switch. For a specific implementation, refer to step 902 in the embodiment in FIG. 9.

A compensation module is configured to compensate for the phase of the first voltage based on the phase difference. For a specific implementation, refer to step 903 in the embodiment in FIG. 9.

Optionally, the compensation module is configured to:

superimpose the phase difference on a reference phase of the first voltage, to obtain a compensated reference phase;

and

adjust, based on the compensated reference phase, the phase of the first voltage in a closed-loop control manner.

Optionally, the compensation module is configured to:

divide the phase difference into a plurality of sub-phase differences; and
compensate for at least one of the plurality of sub-phase differences to the first voltage in at least one control period, respectively.

Optionally, the compensation module is configured to:
if the phase difference exceeds a phase difference threshold, divide the phase difference into the plurality of sub-phase differences.
Optionally, the apparatus further includes:

a second receiving module, configured to receive a reference active power from the central controller; and
a first adjustment module, configured to adjust the phase of the first voltage based on the reference active power.

Optionally, the apparatus further includes:

a third receiving module, configured to a receive reference reactive power from the central controller; and
a second adjustment module, configured to adjust an amplitude of the first voltage based on the reference reactive power.

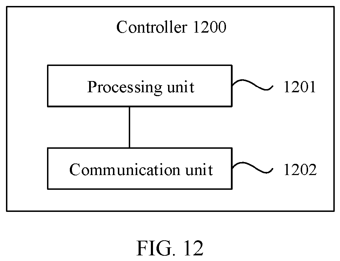

In this embodiment of this application, the central controller may directly send a phase difference between voltages on two sides of the grid connection switch to a power converter in a microgrid. The power converter directly compensates for a phase of a voltage between the power converter and the grid connection switch, instead of compensating for, by the central controller, the phase of the voltage between the power converter and the grid connection switch in a phase closed-loop control manner. Compared with the phase closed-loop control manner, the direct phase compensation manner can quickly synchronize phases of the voltages on the two sides of the grid connection switch. Therefore, the microgrid synchronization control method provided in this embodiment of this application can improve a speed of synchronization control.
It should be noted that when the microgrid synchronization control apparatus provided in the foregoing embodiment performs synchronization control, division of the foregoing functional modules is merely used as an example for description. During actual application, the foregoing functions may be allocated to different functional modules for implementation as required. That is, an inner structure of a device may be divided into different functional modules, to implement all or some functions described above. In addition, the microgrid synchronization control apparatus provided in the foregoing embodiment and the microgrid synchronization control method embodiments pertain to a same concept. For a specific implementation process, refer to the method embodiments. Details are not described herein again.
In addition, FIG. 12 is a diagram of a structure of a controller according to an embodiment of this application. The controller may be the central controller or the converter controller in the power converter, for example, the PCS local controller or the MGCC.
As shown in FIG. 12, the controller 1200 includes a processing unit 1201 and a communication unit 1202. The communication unit 1202 is configured to communicate with another component in a microgrid power supply system, and the processing unit 1201 is configured to implement a function of the central controller or power converter.
All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a generalpurpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semi-conductive medium (for example, a solid-state disk (solid-state disk, SSD)).

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing content is not intended to limit embodiments of this application. Any modification, equivalent replacement, or improvement made without departing from the spirit and principle of embodiments of this application shall fall within the protection scope of embodiments of this application.

**Claims**

1. A microgrid synchronization control method, wherein the method is applied to a microgrid power supply system, the microgrid power supply system comprises a central controller, at least one power converter, and a grid connection switch, the grid connection switch is connected between the at least one power converter and a power grid, and the method comprises:

    sending, by the central controller, a phase difference between a first voltage and a second voltage to the at least one power converter, to enable the at least one power converter to compensate for a phase of the first voltage based on the phase difference, wherein the first voltage is a voltage on a circuit between the at least one power converter and the grid connection switch, and the second voltage is a voltage on a circuit between the power grid and the grid connection switch; and

    in response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, controlling, by the central controller, the grid connection switch to be turned on, to enable the power grid to supply power to the at least one power converter through the grid connection switch.

2. The method according to claim 1, wherein the method further comprises:

    obtaining, by the central controller, the frequency difference between the first voltage and the second voltage;

    determining, by the central controller, a reference active power based on the phase difference and the frequency difference; and

    sending, by the central controller, the reference active power to the at least one power converter, to enable the at least one power converter to adjust the phase of the first voltage based on the reference active power.

3. The method according to claim 1 or 2, wherein the method further comprises:

    obtaining, by the central controller, the amplitude difference between the first voltage and the second voltage;

    determining, by the central controller, a reference reactive power based on the phase difference and the amplitude difference; and

    sending, by the central controller, the reference reactive power to the at least one power converter, to enable the at least one power converter to adjust an amplitude of the first voltage based on the reference reactive power.

4. The method according to any one of claims 1 to 3, wherein the method further comprises:

    collecting, by the central controller, voltage information of the first voltage and voltage information of the second voltage, wherein the voltage information indicates a case in which an instantaneous voltage of a corresponding voltage changes with time; and

    determining, by the central controller, the phase difference based on the voltage information of the first voltage and the voltage information of the second voltage.

5. A microgrid synchronization control method, wherein the method is applied to a microgrid power supply system, the microgrid power supply system comprises at least one power converter and a grid connection switch, the grid connection switch is connected between the at least one power converter and a power grid, and the method comprises:

    receiving, by the power converter, a phase difference from a central controller, wherein the phase difference is a difference between a phase of a first voltage and a phase of a second voltage, the first voltage is a voltage on a circuit between the at least one power converter and the grid connection switch, and the second voltage is a voltage on a circuit between the power grid and the grid connection switch; and

compensating for, by the power converter, the phase of the first voltage based on the phase difference.

6. The method according to claim 5, wherein compensating for, by the power converter, the phase of the first voltage based on the phase difference comprises:

superimposing the phase difference on a reference phase of the first voltage, to obtain a compensated reference phase; and

adjusting, based on the compensated reference phase, the phase of the first voltage in a closed-loop control manner.

7. The method according to claim 5 or 6, wherein compensating for, by the power converter, the phase of the first voltage based on the phase difference comprises:

dividing the phase difference into a plurality of sub-phase differences; and

compensating for at least one of the plurality of sub-phase differences to the first voltage in at least one control period, respectively.

8. The method according to claim 7, wherein dividing the phase difference into the plurality of sub-phase differences comprises:

if the phase difference exceeds a phase difference threshold, dividing the phase difference into the plurality of sub-phase differences.

9. The method according to any one of claims 5 to 8, wherein the method further comprises:

receiving, by the power converter, a reference active power from the central controller; and

adjusting, by the power converter, the phase of the first voltage based on the reference active power.

10. The method according to any one of claims 5 to 9, wherein the method further comprises:

receiving, by the power converter, a reference reactive power from the central controller; and

adjusting, by the power converter, an amplitude of the first voltage based on the reference reactive power.

11. A microgrid power supply system, wherein the microgrid power supply system comprises a central controller, at least one power converter, and a grid connection switch, and the grid connection switch is connected between the at least one power converter and a power grid;

the central controller is configured to send a phase difference between a first voltage and a second voltage to the at least one power converter, wherein the first voltage is a voltage on a circuit between the at least one power converter and the grid connection switch, and the second voltage is a voltage on a circuit between the power grid and the grid connection switch;

the power converter is configured to: receive the phase difference, and compensate for a phase of the first voltage based on the phase difference; and

the central controller is further configured to: in response to a case in which a current phase difference between the first voltage and the second voltage is less than a phase difference threshold, a current frequency difference between the first voltage and the second voltage is less than a frequency difference threshold, and a current amplitude difference between the first voltage and the second voltage is less than an amplitude difference threshold, control the grid connection switch to be turned on, to enable the power grid to supply power to the at least one power converter through the grid connection switch.

12. The system according to claim 11, wherein

the central controller is further configured to: obtain a frequency difference between the first voltage and the second voltage, determine a reference active power based on the phase difference and the frequency difference, and send the reference active power to the at least one power converter; and

the power converter is further configured to: receive the reference active power, and adjust the phase of the first voltage based on the reference active power.

13. The system according to claim 11 or 12, wherein

the central controller is further configured to: obtain an amplitude difference between the first voltage and the second voltage, determine a reference reactive power based on the phase difference and the amplitude difference, and send the reference reactive power to the at least one power converter; and
the power converter is configured to: receive the reference reactive power, and adjust an amplitude of the first voltage based on the reference reactive power.

14. The system according to any one of claims 11 to 13, wherein the central controller is further configured to:

collect voltage information of the first voltage and voltage information of the second voltage, wherein the voltage information indicates a case in which an instantaneous voltage of a corresponding voltage changes with time; and
determine the phase difference based on the voltage information of the first voltage and the voltage information of the second voltage.

15. The system according to any one of claims 11 to 14, wherein the power converter is configured to:

superimpose the phase difference on a reference phase of the first voltage, to obtain a compensated reference phase; and
adjust, based on the compensated reference phase, the phase of the first voltage in a closed-loop control manner.

16. The system according to any one of claims 11 to 15, wherein the power converter is configured to:

divide the phase difference into a plurality of sub-phase differences; and
compensate for at least one of the plurality of sub-phase differences to the first voltage in at least one control period, respectively.

External grid

Switch

Distributed power generation device

Energy storage device

Power-consuming load

Microgrid

FIG. 1

1. The microgrid runs in an islanded mode, the photovoltaic power generation device loses a part of generated power, and the energy storage device cannot meet requirements of all power-consuming loads

2. The energy storage device supplies power to the key load, and the non-key load is temporarily disconnected

3. After synchronization control is completed, turn on the circuit breaker, to connect the microgrid to the external grid

4. Restore power supply to all the loads

External grid

Circuit breaker

PCC    PCC

Photovoltaic power generation device

Energy storage device

Key load

Non-key load

Energy storage device

Key load

Non-key load

Energy storage device

Key load

Non-key load

Energy storage device

Key load

Non-key load

Microgrid

FIG. 2

EP 4 787 656 A1

1. A fault in the transformer 1 causes the sub-microgrid 1 to be disconnected from the external grid, and to become running in an islanded mode, and the energy storage device in the sub-microgrid 1 cannot meet requirements of all power-consuming loads

2. The energy storage device in the sub-microgrid 1 supplies power to the key load, and the non-key load is temporarily disconnected

3. After synchronization control is completed, turn on the bus tie switch, to connect the sub-microgrid 1 to the external grid through the sub-microgrid 2

4. Restore power supply to all the loads

FIG. 3

FIG. 4

Microgrid power supply system

FIG. 5

Sampling signal of a voltage (a second voltage) on an external grid side

Grid-connected switch control instruction

Sampling signal of a voltage (a first voltage) on a microgrid side

MGCC

PCS 1 control instruction

PCS 1 local controller

Energy storage

PCS 1

PCC

Grid-connected switches

External grid

PCS n control instruction

PCS n local controller

Energy storage

PCS n

Load 1

Load k

PCS module

Microgrid power supply system

FIG. 6

EP 4 787 656 A1

A central controller sends a phase difference between a first voltage and a second voltage to at least one power converter, to enable the at least one power converter to compensate for a phase of the first voltage based on the phase difference, where the first voltage is a voltage on a circuit between the at least one power converter and a grid connection switch, and the second voltage is a voltage on a circuit between a power grid and the grid connection switch — 701

In response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, the central controller controls the grid connection switch to be turned on, to enable the power grid to supply power to the at least one power converter through the grid connection switch — 702

FIG. 7

A power converter receives a phase difference from a central controller, where the phase difference is a difference between a phase of a first voltage and a phase of a second voltage, the first voltage is a voltage on a circuit between the power converter and a grid-connected switch, and the second voltage is a voltage on a circuit between a power grid and the grid-connected switch — 801

The power converter compensates for the phase of the first voltage based on the phase difference — 802

FIG. 8

A central controller sends a phase difference between a first voltage and a second voltage to at least one power converter, where the first voltage is a voltage on a circuit between the at least one power converter and a grid-connected switch, and the second voltage is a voltage on a circuit between a power grid and the grid-connected switch ⌁ 901

The power converter receives the phase difference from the central controller ⌁ 902

The power converter compensates for the phase of the first voltage based on the phase difference ⌁ 903

In response to a case in which the phase difference between the first voltage and the second voltage is less than a phase difference threshold, a frequency difference between the first voltage and the second voltage is less than a frequency difference threshold, and an amplitude difference between the first voltage and the second voltage is less than an amplitude difference threshold, the central controller controls the grid-connected switch to be turned on, to enable the power grid to supply power to the at least one power converter through the grid-connected switch ⌁ 904

FIG. 9

FIG. 10

EP 4 787 656 A1

Waveform of a reference phase of a
voltage at an output end of a PCS

Waveform of the first voltage

Phase
reference
value/°

First
voltage/V

Time/s

Time/s

Synchronization
control starts

A PCS local controller receives a
phase difference, and after the
reference phase is compensated,
the reference phase jumps

Synchronization
control starts

Synchronization
control ends

The PCS local controller receives the
phase difference, and after the reference
phase is compensated, a voltage waveform
of the first voltage jumps

FIG. 11

EP 4 787 656 A1

FIG. 12

## INTERNATIONAL SEARCH REPORT

| International application No. |
|---|
| **PCT/CN2024/123484** |

**A. CLASSIFICATION OF SUBJECT MATTER**

H02J 3/38(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 同期, 微电网, 微网, 并网, 开关, 断路器, 功率变换, 逆变器, 相位, 幅值, 频率, 控制器, microgrid, grid, switch, breaker, power conversion, converter, inverter, phase, amplitude, frequency, controller

**C. DOCUMENTS CONSIDERED TO BE RELEVANT**

| Category* | Citation of document, with indication, where appropriate, of the relevant passages | Relevant to claim No. |
|---|---|---|
| X | CN 106026195 A (CHINA ELECTRIC POWER RESEARCH INSTITUTE et al.) 12 October 2016 (2016-10-12) description, paragraphs 8-53, and figures 1-2 | 1-5, 9-14 |
| Y | CN 106026195 A (CHINA ELECTRIC POWER RESEARCH INSTITUTE et al.) 12 October 2016 (2016-10-12) description, paragraphs 8-53, and figures 1-2 | 6-8, 15-16 |
| Y | CN 105162169 A (XUJI GROUP CORP. et al.) 16 December 2015 (2015-12-16) description, paragraphs 4-35, and figures 1-6 | 6-8, 15-16 |
| A | CN 109617075 A (TIANJIN UNIVERSITY) 12 April 2019 (2019-04-12) entire document | 1-16 |
| A | WO 2023224648 A1 (SIEMENS CORP.) 23 November 2023 (2023-11-23) entire document | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 December 2024** | **23 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/123484** |

| Patent document<br>cited in search report | | | Publication date<br>(day/month/year) | Patent family member(s) | Publication date<br>(day/month/year) |
| --- | --- | --- | --- | --- | --- |
| CN | 106026195 | A | 12 October 2016 | None | |
| CN | 105162169 | A | 16 December 2015 | None | |
| CN | 109617075 | A | 12 April 2019 | None | |
| WO | 2023224648 | A1 | 23 November 2023 | None | |

Form PCT/ISA/210 (patent family annex) (July 2022)

**EP 4 787 656 A1**

**Patent documents cited in the description**

- CN 202410015876